# EUROPÄISCHE PATENTSCHRIFT

(11) **EP 3 561 782 B1**
(45) Veröffentlichungstag und Bekanntmachung des Hinweises auf die Patenterteilung: **07.02.2024**
(21) Anmeldenummer: 19167795.4
(22) Anmeldetag: 08.04.2019
(51) Int. Cl.: G07C 13/00, H04L 9/32

(54) **WAHLVERFAHREN**
VOTING METHOD
PROCÉDÉ DE VOTE

(30) Priorität: 24.04.2018 DE 102018109825
(43) Veröffentlichungstag der Anmeldung: 30.10.2019
(73) Patentinhaber: Regio IT Gesellschaft für Informationstechnologie mbH, 52070 Aachen (DE)
(72) Erfinder: Hackmann, Hendrik, 52066 Aachen (DE)
(74) Vertreter: Bauer, Dirk

(56) Entgegenhaltungen:
- DE-A1-102007 014 175
- FR-A1- 2 926 911
- US-A1- 2011 202 464
- US-B1- 6 971 574
- BADR MARWA MAHMOUD ET AL: "Verifiable e-voting system with receipt-freeness", 2014 10TH INTERNATIONAL COMPUTER ENGINEERING CONFERENCE (ICENCO), IEEE, 29. Dezember 2014 (2014-12-29), Seiten 42-47, XP032741310, DOI: 10.1109/ICENCO.2014.7050429 [gefunden am 2015-02-26]

## Beschreibung

Die Erfindung betrifft ein Wahlverfahren, wobei eine Person an einem Stimmabgabegerät mit einer Wählerliste, in der die Person eingetragen ist, eine Stimme abgibt, und das Stimmabgabegerät in einer von der Wählerliste getrennten Stimmenliste die Stimme, sowie in einer von der Wählerliste und von der Stimmenliste getrennten Referenzliste eine Referenz auf den Eintrag in der Stimmenliste einträgt.

Aus DE 10 2007 014 175 A1 ist ein solches Wahlverfahren mit einer als Matrix darstellbaren Referenzliste bekannt. Über die nur ihr bekannte Position in der Matrix und die dort hinterlegte Referenz in die Stimmenliste kann die Person, die eine Stimme abgegeben hat, sich diese erneut anzeigen lassen und kann so überprüfen, ob die eingetragene Stimme mit ihrer Erinnerung übereinstimmt.

Ein Nachweis einer nachträglichen Veränderung der in der Stimmenliste eingetragenen Stimme gegenüber Dritten setzt in dem bekannten Verfahren einen anderweitigen Nachweis der Richtigkeit der Erinnerung der Person voraus.

Im Hintergrund der Erfindung schlägt DE 10 2009 001362 A1 für ein Stimmabgabegerät für ein solches Wahlverfahren eine Quittierungsfunktion vor, die es der Person ermöglicht zu überprüfen, ob die abgegebene Stimme korrekt eingetragen wurde. Die Quittierungsfunktion steht aber insbesondere für Wahlen zum Deutschen Bundestag im Widerspruch zu der aus Art. 38 (1) GG abgeleiteten Forderung nach "Quittungsfreiheit": Der Wähler darf Dritten nicht nachweisen können, was er gewählt hat.

Badr M. et al., "Verifiable e-voting System with receipt-freeness", www.research-gate.net/publication/283021428_Verifiable_e-voting_system_with_receipt_freeness schlägt vor, nach der Stimmabgabe der Person eine Quittung mit einem aus der Stimme erzeugten kryptischen Code zu übergeben und alle derart erzeugten Codes zu Veröffentlichen. US 6,971,574 B1 schlägt vor, auf der Quittung einen mit Personendaten der Person verknüpften Hashwert zu nennen.

Im weiteren Hintergrund der Erfindung sind sowohl Blockchains allgemein bekannt (beispielsweise aus Drescher, Daniel: Blockchain Grundlagen, Frechen 2017), als auch aus US 2017/352219 A1, US 2017/109955 A1, KR 101837169 B1, CN 107294727 A, WO 2017/145005 A1, CN 107146318 A, US 2017/0061398 A1 und US 2017/0221052 A1 deren Nutzung in Wahlverfahren.

Im weiteren Hintergrund der Erfindung sind andere Wahlverfahren mit verschlüsselten Datenbanken aus JP 4235453 B2, CN 102568074 BB, US 2002/0077887 A1, DE 10 2006 039662 B4 und US 7,657,452 B2 bekannt.

### Aufgabe

Der Erfindung liegt die Aufgabe zugrunde, einen Nachweis einer nachträglichen Veränderung der abgegebenen Stimme zu ermöglichen.

### Lösung

Vorgeschlagen wird ein Wahlverfahren mit den Merkmalen des Anspruchs 1. Die Nutzung des Hashwerts zum nachträglichen Aufrufen des Eintrags setzt eine Prüfung aller Einträge der Stimmenliste solange voraus, bis ein dem Hashwert entsprechender Eintrag gefunden wurde. Da sich bei einer nachträglichen Veränderung des Eintrags in der Stimmenliste der Hashwert dieses Eintrags ändert, wird dieser bei der Prüfung aller Einträge nicht gefunden. Die Nicht-Auffindbarkeit einer abgegebenen Stimme in der Stimmenliste weist umgekehrt deren nachträgliche Veränderung nach.

Vorzugsweise bestimmt in einem erfindungsgemäßen Verfahren das Stimmabgabegerät einen Hashwert des Eintrags in der Wählerliste und trägt diesen zu der Referenz in der Referenzliste ein. Die Nicht-Auffindbarkeit des Eintrags einer Person in der Wählerliste weist die nachträgliche Veränderung dieses Eintrags nach. Über die Zuordnung zu der Referenz auf die abgegebene Stimme kann die Person sicherstellen, dass sie bei einer nachträglichen Prüfung tatsächlich die eigene und nicht eine zufällige, von einer anderen Person abgegebene Stimme sieht.

Im erfindungsgemäßen Verfahren vergibt die Person ein Kennwort und das Stimmabgabegerät verschlüsselt mit dem Kennwort den Eintrag in der Referenzliste. Da zur Entschlüsselung das Kennwort benötigt wird, dieser aber nur der Person selbst bekannt ist, können Dritte nicht auf den Eintrag in der Referenzliste zugreifen und daher auch die zugehörige, in der Stimmenliste eingetragene Stimme nicht ermitteln.

Vorzugsweise wird in einem erfindungsgemäßen Verfahren zunächst die Person in der Wählerliste eingetragen und vor Abgabe der Stimme anhand des Eintrags in der Wählerliste identifiziert. Die Identifikation anhand der Wählerliste vermeidet die Stimmabgabe durch Dritte.

Vorzugsweise wird in einem erfindungsgemäßen Verfahren in dem Eintrag in der Wählerliste vermerkt, wenn die Person die Stimme abgegeben hat. Der Eintrag vermeidet die mehrfache Stimmabgabe.

Vorzugsweise werden in einem erfindungsgemäßen Verfahren die Wählerliste und/oder die Referenzliste vor Auswertung der Stimmenliste vernichtet. Durch Vernichten entweder der Wähler- oder der Referenzliste (oder beider Listen) wird die Prüfung der korrekten Eintragung der Stimme auf den Zeitraum bis zur Auswertung der Stimmenliste beschränkt. Durch Vernichten der Referenzliste wird die Entschlüsselung von Einträgen in dieser Liste nach diesem Zeitraum vermieden. Beide Maßnahmen vermindern das Risiko nachträglicher unberechtigter Zugriffe auf die Information, welche Person wie gewählt hat. Vorzugsweise sind in einem erfindungsgemäßen Verfahren die Wählerliste und/oder die Referenzliste Datenbanken, insbesondere verteilte, weiter insbesondere synchronisierte Datenbanken, weiter insbesondere Blockchains. Die Nutzung von Datenbanken erlaubt die elektronische Verarbeitung großer Datenmengen. Verteilte und insbesondere darüber hinaus synchronisierte - also in mehreren Instanzen identisch vorhandene - Datenbanken vermindern das Datenverlustrisiko. Blockchains bieten darüber hinaus ein hohes Maß an Sicherheit gegenüber unberechtigten Änderungen.

Abhängig von den Anforderungen an die Sicherheit vor Datenverlust und unberechtigten Änderungen eines Wahlverfahrens können beispielsweise alle drei Listen Blockchains oder nur die Referenzliste und die Stimmenliste Blockchains und die Wählerliste eine weniger aufwändige Datenbank sein.

Vorzugsweise ist in einem erfindungsgemäßen Verfahren eine Gruppe von Stimmabgabegeräten zur Abgabe der Stimme der Person eingerichtet, wobei die Wählerliste und die Stimmenliste auf den Stimmabgabegeräten der Gruppe synchronisiert werden. Die Synchronisierung zwischen den Stimmabgabegeräten vermeidet eine mehrfache Stimmabgabe durch die Person und vermindert das Datenverlustrisiko.

Wenn zusätzlich die Referenzliste zwischen Stimmabgabegeräten der Gruppe synchronisiert wird, kann eine Person die korrekte Eintragung der abgegebenen Stimme an allen Stimmabgabegeräten der Gruppe überprüfen.

Vorzugsweise vergibt in einem erfindungsgemäßen Verfahren das Stimmabgabegerät einen Geräteschlüssel und verschlüsselt den Eintrag in der Stimmenliste mit dem Geräteschlüssel. Da zur Entschlüsselung der Geräteschlüssel benötigt wird, dieser aber nur auf dem jeweiligen Stimmabgabegerät bekannt ist, kann die Person nur an genau dem Stimmabgabegerät auf den Eintrag in der Stimmenliste zugreifen und die eingetragene Stimme ermitteln, an dem sie die Stimme abgegeben hat.

Vorzugsweise werden in einem erfindungsgemäßen Verfahren die auf dem Stimmabgabegerät abgegebenen Stimmen zunächst in Blöcken gesammelt und die Blöcke in der Stimmenliste eingetragen. Der Eintrag in der Wählerliste, dass eine Person gewählt hat, erhält so einen anderen Zeitstempel als der Eintrag der Stimme dieser Person in der Stimmenliste. Beide Einträge können so einander nicht über die Zeitstempel zugeordnet werden. Die drei vorgenannten Maßnahmen vermindern jeweils wiederum das Risiko nachträglicher unberechtigter Zugriffe auf die Information, welche Person wie gewählt hat.

Vorzugsweise ist ein Stimmabgabegerät zur Ausführung eines erfindungsgemäßen Wahlverfahrens eingerichtet.

Vorzugsweise weist ein Wahllokal mit einer Mehrzahl solcher Stimmabgabegeräte ein Überwachungsgerät auf, das die Stimmabgabegeräte auf Veränderungen prüft und von den Stimmabgabegeräten auf Veränderungen geprüft wird. Eine solche gegenseitige Überwachung vermeidet die unbemerkte unberechtigte Veränderung eines Stimmabgabegeräts.

### Ausführungsbeispiel

Die Erfindung wird nachfolgend anhand eines Ausführungsbeispiels erläutert. Das in der Zeichnungsfigur gezeigte erfindungsgemäße Wahllokal 1 ist mit einer Mehrzahl erfindungsgemäßer Stimmabgabegeräte 2 sowie mit einem Überwachungsgerät 3 ausgestattet.

Die Stimmabgabegeräte 2 und das Überwachungsgerät 3 sind Universalcomputer, die mittels eines erfindungsgemäßen Softwareprogrammprodukts für die Ausführung des erfindungsgemäßen Wahlverfahrens eingerichtet sind. Die Stimmabgabegeräte 2 sind untereinander und mit dem Überwachungsgerät 3, sowie mit weiteren (nicht dargestellten) Stimmabgabegeräten 2 in anderen Wahllokalen 4 in einer Cloud 5 vernetzt.

Auf den Stimmabgabegeräten 2 sind jeweils eine Wählerliste 6, eine Stimmenliste 7 und eine Referenzliste 8 als drei unterschiedliche, voneinander vollständig entkoppelte private Blockchains mit Berechtigungssteuerung ("private permissioned blockchains") implementiert, die zudem unterschiedliche Lebenszeiten aufweisen, sich aber gegenseitig referenzieren. Die Wählerliste 6 und die Stimmenliste 7 wird über alle Stimmabgabegeräte 2 in der Cloud 5, die Referenzliste 8 des Wahllokals 1,4 nur über die dortigen Stimmabgabegeräte 2 synchronisiert. Alle Stimmabgabegeräte 2 sind berechtigt, die jeweils bei ihnen angelegten Wählerlisten 6, Stimmenlisten 7 und Referenzlisten 8 zu ergänzen.

Zur Vorbereitung einer Wahl nach dem erfindungsgemäßen Wahlverfahren wird zunächst die Wählerliste 6 von einer nicht dargestellten zentralen Meldebehörde 9 erstellt. In der Wählerliste 6 wird zu jeder zur Teilnahme an der Wahl berechtigten Person 10 eine Hashreferenz über deren Personendaten (Kennung im Wählerverzeichnis, Meldebehörde 9, Wahlkreis) und eine von der Meldebehörde 9 vergebene PIN erstellt. Außerdem werden TANs generiert und gleichfalls in der Wählerliste 6 als Hashreferenz gespeichert. PIN und jeweils eine der TANs werden den zur Wahl berechtigten Personen 10 getrennt mitgeteilt. Für die Wählerliste 6 und die zunächst leere Stimmenliste 7 erhalten alle Stimmabgabegeräte 2 Lese- und Schreibzugriff.

In jedem Wahllokal 1, 4 werden die dortigen Stimmabgabegeräte 2 durch einen Wahlleiter 11 gestartet und mit dem Überwachungsgerät 3 vernetzt. Die Stimmabgabegeräte 2 und das Überwachungsgerät 3 ermitteln in regelmäßigen Abständen einen Hashwert des Sourcecodes des jeweils installierten Systems und übermitteln sich diese Werte wechselseitig: Ändert sich der Hashwert eines Stimmabgabegeräts während der Wahl, wird dieses Gerät automatisch außer Betrieb genommen. Ändert sich der Hashwert des Überwachungsgeräts 3, wird das jeweilige Wahlbüro geschlossen.

Der jeweils gültige Sourcecode des Systems der Stimmabgabegeräte 2 ist öffentlich und über alle Stimmabgabegeräte 2 identisch, der Hashwert wird während der Wahl öffentlich einsehbar auf dem Überwachungsgerät 3 angezeigt.

Eine zur Wahl berechtigte Person 10 meldet sich mit ihren Personendaten und der PIN an einem der Stimmabgabegeräte 2 an. Stimmt die Hashreferenz über die eingegebenen Daten mit einem in der Wählerliste 6 vorhandenen Wert überein, wird der Zugriff gewährt.

Zur Abgabe ihrer Stimme nutzt die Person 10 die ihr vorliegende TAN. Das Stimmabgabegerät sucht in der Wählerliste 6 einen Block aus der Hashreferenz der Person 10 und dem Hashwert der TAN: Fehlt ein solcher Block, legt das Stimmabgabegerät ihn an und gewährt Zugriff für die Stimmabgabe. Ist der Block bereits vorhanden, dann wurde die Stimme bereits gespeichert, ein erneuter Zugriff auf die Stimmabgabe wird dann verwehrt.

Mit der Stimmabgabe benennt die abstimmende Person 10 ein persönliches Kennwort. Das Stimmabgabegerät speichert vorläufig in der Stimmenliste 7 die abgegebene Stimme, den Wahlkreis und den Wahlbezirk sowie in der Referenzliste 8 einen Hashwert aus Hashreferenzen der Person 10 und der abgegebenen Stimme und verschlüsselt den Eintrag in der Referenzliste mit dem Kennwort und den Eintrag in der Stimmenliste 7 mit einem Geräteschlüssel des Stimmabgabegeräts. Nach einem definierten Zeitraum werden die von allen Stimmabgabegeräten 2 vorläufig gespeicherten Stimmen als Block in der Stimmenliste 7 gespeichert.

Zur Kontrolle ihrer Stimmabgabe kann sich jede zur Wahl berechtigte Person 10 mit ihren Personendaten und der PIN erneut an dem Stimmabgabegerät anmelden und das nur ihr bekannte persönliche Kennwort eingeben. Das Stimmabgabegerät versucht zunächst, nacheinander die Einträge in der Referenzliste mit dem Kennwort zu entschlüsseln. Gelingt dies bei einem Eintrag, liest das Stimmabgabegerät die Hashwerte der Stimme und der Person 10, überprüft zunächst die Wählerliste auf einen passenden Eintrag, entschlüsselt dann nacheinander jede der abgegebenen Stimmen in der Stimmenliste 7 mit seinem Geräteschlüssel, bestimmt deren Hashwert und zeigt die Stimme an, wenn dieser mit einem in der Referenzliste 8 gespeicherten Block übereinstimmt.

Nach Abschluss der Wahl werden die Wählerlisten 6 und Referenzlisten 8 auf allen Stimmabgabegeräten 2 gelöscht und die Stimmenlisten 7 an die Wahlbehörde übermittelt. Nur dort sind die Geräteschlüssel bekannt und können zum Entschlüsseln der Stimmen in den Stimmenlisten 7 genutzt werden.

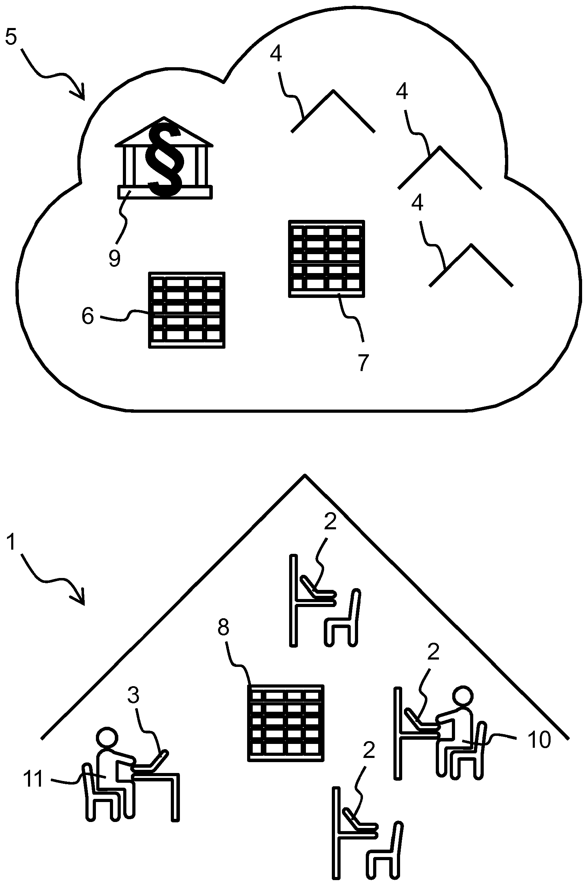

### In der Figur sind

- 1: Wahllokal
- 2: Stimmabgabegerät
- 3: Überwachungsgerät
- 4: weiteres Wahllokal
- 5: Cloud
- 6: Wählerliste
- 7: Stimmenliste
- 8: Referenzliste
- 9: Meldebehörde
- 10: Person
- 11: Wahlleiter

## Patentansprüche

1. Wahlverfahren, wobei eine Person (10) an einem Stimmabgabegerät (2) mit einer Wählerliste (6), in der die Person (10) eingetragen ist, eine Stimme abgibt, und das Stimmabgabegerät (2) in einer von der Wählerliste (6) getrennten Stimmenliste (7) die Stimme, sowie in einer von der Wählerliste (6) und von der Stimmenliste (7) getrennten Referenzliste (8) eine Referenz auf den Eintrag in der Stimmenliste (7) einträgt, ***dadurch gekennzeichnet, dass*** die Stimmenliste (7) eine Blockchain ist und das Stimmabgabegerät (2) als die Referenz einen Hashwert des Eintrags in der Stimmenliste (7) bestimmt, wobei die Person (10) ein nur der Person (10) selbst bekanntes Kennwort vergibt und das Stimmabgabegerät (2) den Eintrag in der Referenzliste (8) mit dem Kennwort verschlüsselt und nachträglich alle Einträge der Stimmenliste (7) solange geprüft werden, bis ein der entschlüsselten Referenz entsprechender Eintrag gefunden wurde oder durch Nicht-Auffindbarkeit eine nachträgliche Veränderung der Stimme in der Stimmenliste (7) nachgewiesen wird.

2. Wahlverfahren nach dem vorgenannten Anspruch, ***dadurch gekennzeichnet, dass*** das Stimmabgabegerät (2) einen Hashwert des Eintrags in der Wählerliste (6) bestimmt und zu der Referenz in der Referenzliste (8) einträgt.

3. Wahlverfahren nach einem der vorgenannten Ansprüche, ***dadurch gekennzeichnet, dass*** zunächst die Person (10) in der Wählerliste (6) eingetragen und vor Abgabe der Stimme anhand des Eintrags in der Wählerliste (6) identifiziert wird.

4. Wahlverfahren nach einem der vorgenannten Ansprüche, ***dadurch gekennzeichnet, dass*** in der Wählerliste (6) vermerkt wird, wenn die Person (10) die Stimme abgegeben hat.

5. Wahlverfahren nach einem der vorgenannten Ansprüche, ***dadurch gekennzeichnet, dass*** die Wählerliste (6) und/oder die Referenzliste (8) vor Auswertung der Stimmenliste (7) vernichtet werden.

6. Wahlverfahren nach einem der vorgenannten Ansprüche, ***dadurch gekennzeichnet, dass*** die Wählerliste (6) und/oder die Referenzliste (8) Blockchains sind.

7. Wahlverfahren nach einem der vorgenannten Ansprüche, ***dadurch gekennzeichnet, dass*** eine Gruppe von Stimmabgabegeräten (2) zur Abgabe der Stimme der Person (10) eingerichtet ist und die Wählerliste (6) und die Stimmenliste (7) auf den Stimmabgabegeräten (2) der Gruppe synchronisiert werden.

8. Wahlverfahren nach einem der vorgenannten Ansprüche, ***dadurch gekennzeichnet, dass*** das Stimmabgabegerät (2) einen Geräteschlüssel vergibt und den Eintrag in der Stimmenliste (7) mit dem Geräteschlüssel verschlüsselt.

## Claims

1. A voting method, wherein a person (10) casts a vote on a voting device (2) with a list of voters (6) on which the person (10) is registered and the voting device (2) registers the vote in a list of votes (7) which is separate from the list of voters (6), and records a reference to the entry in the list of votes (7) in a reference list (8) which is separate from the list of voters (6) and the list of votes (7), **characterized in that** the list of votes (7) is a blockchain and the voting device (2) determines a hash value of the entry in the list of votes (7) as the reference, wherein the person (10) assigns a password known only to the person (10) themselves, and the voting device (2) encrypts the entry in the reference list (8) with the password and subsequently checks all entries in the list of votes (7) until an entry corresponding to the decrypted reference is found or a subsequent change in the vote in the list of votes (7) is demonstrated by the fact that this cannot be found.

2. The voting method according to the preceding claim, **characterized in that** the voting device (2) determines a hash value of the entry in the list of voters (6) and registers it as part of the reference in the reference list (8).

3. The voting method according to any one of the preceding claims, **characterized in that** the person (10) is initially registered in the list of voters (6) and is identified before the vote is cast based on the entry in the list of voters (6).

4. The voting method according to any one of the preceding claims, **characterized in that** a note is made in the list of voters (6) when the person (10) has cast their vote.

5. The voting method according to any one of the preceding claims, **characterized in that** the list of voters (6) and/or the reference list (8) are destroyed before the list of votes (7) is evaluated.

6. The voting method according to any one of the preceding claims, **characterized in that** the list of voters (6) and/or the reference list (8) are blockchains.

7. The voting method according to any one of the preceding claims, **characterized in that** a group of voting devices (2) is set up for the person (10) to cast their vote and the list of voters (6) and the list of votes (7) on the voting devices (2) of the group are synchronized.

8. The voting method according to any one of the preceding claims, **characterized in that** the voting device (2) assigns a device key and encrypts the entry in the list of votes (7) using the device key.

## Revendications

1. Procédé de vote, dans lequel une personne (10) vote sur un dispositif de vote (2) avec une liste électorale (6) dans laquelle la personne (10) est inscrite, et le dispositif de vote (2) inscrit le vote sous une liste de vote (6) distincte de la liste électorale (7), ainsi que dans une liste de référence (8) distincte de la liste électorale (6) et la liste de référence (8) inscrit une référence à l'inscription dans la liste électorale (7), **caractérisé en ce que** la liste électorale (7) est une blockchain et que le dispositif de vote (2) détermine une valeur de hachage de l'entrée dans la liste de vote (7) comme référence, dans lequel la personne (10) attribue un mot de passe connu uniquement de la personne (10) elle-même et le dispositif de vote (2) crypte l'entrée dans la liste de référence (8) avec le mot de passe et toutes les inscriptions dans la liste de vote (7) sont ensuite vérifiées jusqu'à ce qu'une entrée correspondant à la référence déchiffrée soit trouvée ou qu'une modification ultérieure du vote dans la liste de vote (7) soit prouvée car il est introuvable.

2. Procédé de vote selon la revendication précitée, **caractérisé en ce que** le dispositif de vote (2) détermine une valeur de hachage de l'inscription dans la liste électorale (6) et l'inscrit dans la référence dans la liste de référence (8).

3. Procédé de vote selon une des revendications précédentes, **caractérisé en ce que** la personne (10) est d'abord inscrite sur la liste électorale (6) et est identifiée sur la base de l'inscription dans la liste électorale (6) avant de voter.

4. Procédé de vote selon une des revendications précédentes, **caractérisé en ce qu'**il est noté dans la liste électorale (6) le moment où la personne (10) a voté.

5. Procédé de vote selon une des revendications précédentes, **caractérisé en ce que** la liste électorale (6) et/ou la liste de référence (8) doit être détruite avant l'évaluation de la liste de vote (7).

6. Procédé de vote selon une des revendications précédentes, **caractérisé en ce que** la liste électorale (6) et/ou la liste de référence (8) sont des blockchains.

7. Procédé de vote selon une des revendications précédentes, **caractérisé en ce qu'**un groupe de dispositifs de vote (2) est mis en place pour émettre le vote de la personne (10) et la liste électorale (6) et la liste de vote (7) sont synchronisées sur les dispositifs de vote (2) du groupe.

8. Procédé de vote selon une des revendications précédentes, **caractérisé en ce que** le dispositif de vote (2) délivre une clé de dispositif et crypte l'inscription dans la liste de vote (7) avec la clé de dispositif.
